# EUROPEAN PATENT APPLICATION

(11) **EP 4 600 724 A1**
(43) Date of publication of application: **13.08.2025**
(21) Application number: 24214698.3
(22) Date of filing: 22.11.2024
(51) Int. Cl.: G02F 1/1335, G02F 1/1339

(54) **REFELCTIVE DISPLAY PANEL**

(30) Priority: 06.02.2024 US 202463550568 P; 25.04.2024 TW 113115584
(71) Applicant: Hannstar Display Corporation, Taipei City 114762 (TW)
(72) Inventor: CHIAO, Yu-Chi, Taipei City 114762 (TW); SU, Chen-Hao, Taipei City 114762 (TW); YEH, Cheng-Yen, Taipei City 114762 (TW); LIU, Hsuan-Chen, Taipei City 114762 (TW); LIN, Chih-Pin, Taipei City 114762 (TW); KAO, Ling Chih, Taipei City 114762 (TW)
(74) Representative: Becker, Eberhard

(57) **Abstract**

A reflective display panel (10, 11, 12, 20) includes a first substrate (101), a second substrate (102), pixel structures (PX, PX1, PX2, PX3), spacers (SP, SP-A), a first alignment layer (AL1), a second alignment layer (AL2), a liquid crystal layer (LCL), and light shielding patterns (LSP, LSP-A). The pixel structures (PX, PX1, PX2, PX3) are disposed on the first substrate (101). The spacers (SP, SP-A) and the liquid crystal layer (LCL) are disposed between the first and second substrates (101, 102). The first alignment layer (AL1) is disposed on the first substrate (101) and has a first alignment direction (AD1). The second alignment layer (AL2) is disposed on the second substrate (102) and has a second alignment direction (AD2). Each spacer (SP, SPA) has a first side edge (SPe1) and a second side edge (SPe2) facing away from each other and sequentially arranged along the first or second alignment direction (AD1, AD2). In a stacking direction of the first and second substrates (101, 102), each light shielding pattern (LSP, LSP-A) overlaps with the second side edge (SPe2) of one of the spacers (SP, SP-A), but does not overlap with the first side edge (SPe1) thereof.

## Description

### BACKGROUND

### Technical Field

The disclosure relates to a display panel, and in particular to a reflective display panel.

### Description of Related Art

In order to provide a liquid crystal layer with uniform thickness in a display panel, a common practice is to dispersedly dispose multiple spacers between two substrates to form a cavity for filling a liquid crystal material. For a reflective display panel, most of the spacers are disposed in a reflection area of a pixel structure or a spacing between two adjacent pixel structures. Since there is a significant height difference between the spacer and a film surface on which the spacer stands, during an alignment process, an alignment effect of a part of an alignment layer shielded by the spacer along an alignment direction is reduced, thereby affecting an arrangement state of a part of the liquid crystal layer, and causing the phenomenon of dark state light leakage.

### SUMMARY

The disclosure provides a reflective display panel, which has improved dark state performance and display contrast.

A reflective display panel of the disclosure includes a first substrate, a second substrate, multiple pixel structures, multiple spacers, a first alignment layer, a second alignment layer, a liquid crystal layer, and multiple light shielding patterns. The first substrate and the second substrate are overlappingly disposed along a stacking direction. The pixel structures are disposed on the first substrate and each has a reflective electrode. The spacers are disposed between the first substrate and the second substrate. The first alignment layer is disposed on the first substrate and has a first alignment direction. The second alignment layer is disposed on the second substrate and has a second alignment direction. The liquid crystal layer is disposed between the first alignment layer and the second alignment layer. The light shielding patterns respectively overlap with the spacers along the stacking direction. Each spacer has a first side edge and a second side edge facing away from each other and sequentially arranged along the first alignment direction or the second alignment direction. In the stacking direction, each light shielding pattern overlaps with the second side edge of one of the spacers, but does not overlap with the first side edge of the one of the spacers.

Based on the above, in the reflective display panel according to the embodiments of the disclosure, the spacers disposed between the first substrate and the second substrate are covered with the alignment layers. Each spacer has the first side edge and the second side edge sequentially arranged along the alignment direction of the alignment layer. Through overlappingly disposing the light shielding pattern on the second side edge of each spacer, dark state light leakage caused by a weak alignment of the alignment layer on the second side edge of the spacer can be effectively reduced. In addition, since the light shielding pattern does not overlap with the first side edge of the spacer, excessive reflectivity reduction of the reflective display panel caused by disposing the light shielding pattern can be prevented.

### BRIEF DESCRIPTION OF THE DRAWINGS

FIG. 1 and FIG. 2 are schematic front views of a part of multiple film layers of a reflective display panel according to a first embodiment of the disclosure.
FIG. 3 is a schematic cross-sectional view of the reflective display panel of FIG. 1 and FIG. 2.
FIG. 4 is a schematic front view of a part of multiple film layers of a reflective display panel according to a second embodiment of the disclosure.
FIG. 5 and FIG. 6 are schematic front views of a part of multiple film layers of a reflective display panel according to a third embodiment of the disclosure.
FIG. 7 is a schematic cross-sectional view of the reflective display panel of FIG. 5 and FIG. 6.
FIG. 8 and FIG. 9 are schematic front views of a part of multiple film layers of a reflective display panel according to a fourth embodiment of the disclosure.
FIG. 10 is a schematic cross-sectional view of the reflective display panel of FIG. 8 and FIG. 9.

### DESCRIPTION OF THE EMBODIMENTS

The aforementioned and other technical contents, features, and effects of the disclosure will be clearly presented in the following detailed description of a preferred embodiment with reference to the drawings. Directional terms, such as upper, lower, left, right, front, or back, mentioned in the following embodiments are only for reference to the directions of the drawings. Therefore, the directional terms are used to illustrate but not to limit the disclosure.

Reference will now be made in detail to the exemplary embodiments of the disclosure, and examples of the exemplary embodiments are illustrated in the drawings. Wherever possible, the same reference numerals are used in the drawings and the description to refer to the same or similar parts.

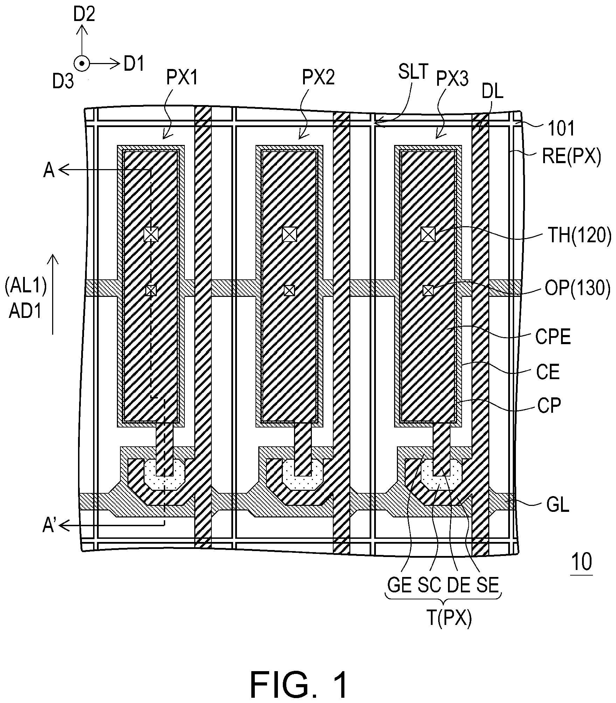

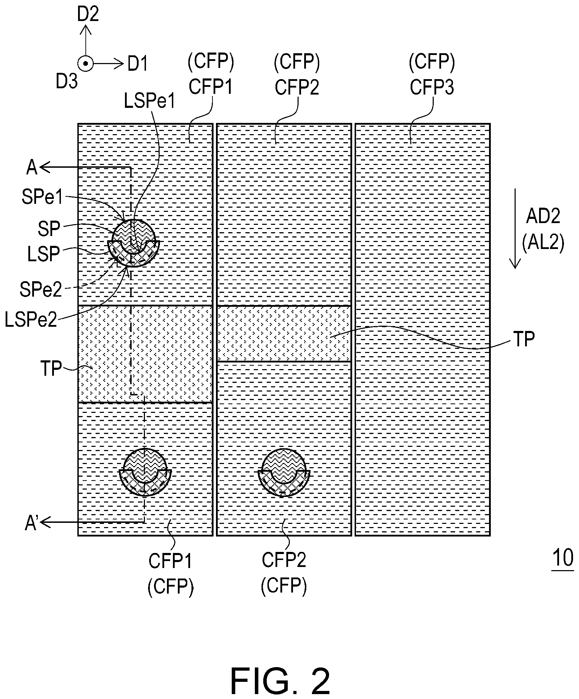

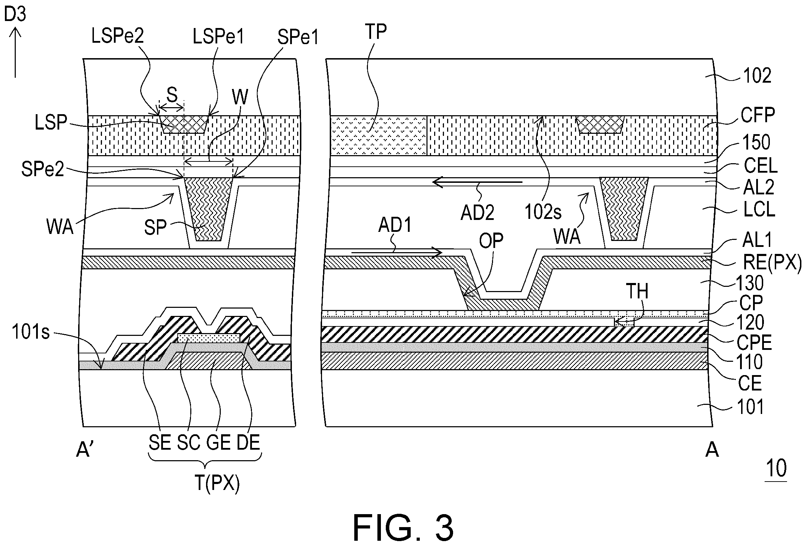

FIG. 1 and FIG. 2 are schematic front views of a part of multiple film layers of a reflective display panel according to a first embodiment of the disclosure. FIG. 3 is a schematic cross-sectional view of the reflective display panel of FIG. 1 and FIG. 2. FIG. 3 corresponds to a cross-sectional line A-A' of FIG. 1 and FIG. 2. For clear presentation, FIG. 1 only shows a part of the film layers on a first substrate 101 in FIG. 3, and FIG. 2 only shows a part of the film layers on a second substrate 102 in FIG. 3.

Please refer to FIG. 1 to FIG. 3. A reflective display panel 10 includes the first substrate 101, the second substrate 102, multiple data lines DL, multiple scanning line GL, multiple pixel structures PX, and a liquid crystal layer LCL. The first substrate 101 and the second substrate 102 are disposed overlapping with each other, and the liquid crystal layer LCL is disposed between the first substrate 101 and the second substrate 102. The overlapping relationship here means, for example, that the first substrate 101 and the second substrate 102 overlap with each other along a stacking direction (for example, a direction D3). Unless otherwise mentioned below, overlapping relationships between any two components are all defined in such a manner, and overlapping directions thereof will not be elaborated.

In the embodiment, the data lines DL are, for example, arranged at intervals on the first substrate 101 along a direction D1 and each thereof extends in a direction D2, and the scanning lines GL are, for example, arranged at intervals on the first substrate 101 along the direction D2 and each thereof extends in the direction D 1. More specifically, the scanning lines GL intersect the data lines DL and define multiple pixel areas of the reflective display panel 10. Multiple pixel structures PX are respectively disposed in the pixel areas and are each electrically connected to one scanning line GL and one data line DL. For example, the pixel structures PX may be arranged into multiple rows respectively extending along the direction D1 and multiple columns respectively extending along the direction D2, that is, the pixel structures PX are arranged in an array on the first substrate 101.

In detail, the pixel structures PX may each include an active element T and a reflective electrode RE that are electrically connected to each other. In the embodiment, a method of forming the active element T may include the following steps. A gate GE, a gate insulating layer 110, a semiconductor pattern SC, a source SE, and a drain DE are sequentially formed on the first substrate 101. The semiconductor pattern SC is disposed overlapping with the gate GE. The source SE and the drain DE overlap with the semiconductor pattern SC and are in electrical contact with two different areas of the semiconductor pattern SC. In the embodiment, the gate GE of the active element T may be selectively disposed below the semiconductor pattern SC to form a bottom-gate thin film transistor (TFT), but not limited thereto. In other embodiments, the gate of the active element may be selectively disposed above the semiconductor pattern to form a top-gate TFT.

Furthermore, the active element T may be sequentially covered with an insulating layer 120 and an insulating layer 130. In the embodiment, the insulating layer 120 is, for example, a passivation layer, and the insulating layer 130 is, for example, a planarization layer. For example, in the embodiment, the pixel structure PX may also include a common electrode CE, a capacitive electrode CPE, and a conductive pattern CP that overlap with each other, but not limited thereto. The common electrode CE is disposed between the first substrate 101 and the gate insulating layer 110. The capacitive electrode CPE is disposed between the gate insulating layer 110 and the insulating layer 120. Therefore, the capacitive electrode CPE, the common electrode CE, and the gate insulating layer 110 sandwiched therebetween may form a storage capacitor. In other embodiments, the pixel structure PX may not include the common electrode CE and the capacitive electrode CPE that overlap with each other. The conductive pattern CP is disposed between the insulating layer 120 and the insulating layer 130.

In the embodiment, the insulating layer 130 has an opening OP, and the opening OP exposes a part of the surface of the conductive pattern CP. The reflective electrode RE of the pixel structure PX is disposed on the surface of the insulating layer 130 and is electrically connected to the conductive pattern CP via the opening OP of the insulating layer 130. The conductive pattern CP is electrically connected to the capacitive electrode CPE via a contact hole TH of the insulating layer 120, and the capacitive electrode CPE may extend from the drain DE of the active element T (that is, the drain DE and the capacitive electrode CPE are coupled to each other), but not limited thereto. In other embodiments, the pixel structure PX may not include the conductive pattern CP, and the reflective electrode RE is electrically connected to the drain DE of the active element T via a through hole penetrating the insulating layer 130 and the insulating layer 120.

It should be noted that the gate GE, the source SE, the drain DE, the semiconductor pattern SC, the gate insulating layer 110, the passivation layer (that is, insulating layer 120), and the planarization layer (that is, insulating layer 130) may be respectively implemented by any gate, any source, any drain, any semiconductor pattern, any gate insulating layer, any passivation layer, and any planarization layer used for the reflective display panel well known to persons skilled in the art, and the gate GE, the source SE, the drain DE, the semiconductor pattern SC, the gate insulating layer 110, the passivation layer, and the planarization layer may be respectively formed by any method well known to persons skilled in the art, so there will be no elaboration here.

Further, the reflective display panel 10 further includes multiple color filter patterns CFP, which are disposed on the second substrate 102 and respectively overlap with the reflective electrodes RE of the pixel structures PX. The color filter patterns CFP have at least three filter colors. For example, each color filter pattern CFP is adapted to allow red light, green light, or blue light to pass through, but not limited thereto. In the embodiment, in order to adjust color gamut performance of display color, the reflective display panel 10 may further include multiple light transmitting patterns TP disposed on the second substrate 102. The light transmitting patterns TP overlap with at least part of the reflective electrodes RE. The light transmitting pattern TP does not overlap with the color filter pattern CFP. The light transmitting pattern TP is adapted to allow light of various colors to pass through. For example, red light, green light, and blue light may all pass through the light transmitting pattern TP without substantial loss or with only slight loss. For example, color filter patterns CFP1, CFP2, and CFP3 may respectively be a green color resist, a red color resist, and a blue color resist, and the light transmitting pattern TP may include a transparent photoresist, but not limited thereto. For example, one pixel may include three pixel structures PX (for example, pixel structures PX1, PX2, and PX3 in FIG. 1). The pixel structures PX1, PX2, and PX3 respectively have color filter patterns CFP1, CFP2, and CFP3. The color filter patterns CFP1, CFP2, and CFP3 may respectively be a green color resist, a red color resist, and a blue color resist. The light transmitting pattern TP is disposed in the pixel structure PX1 and pixel structure PX2, but is not disposed in the pixel structure PX3. The plane area of the color filter pattern CFP1 is smaller than the plane area of the color filter pattern CFP2 (that is, the plane area of the light transmitting pattern TP located in the pixel structure PX1 is larger than the plane area of the light transmitting pattern TP located in the pixel structure PX2), and the plane area of the color filter pattern CFP2 is smaller than the plane area of the color filter pattern CFP3, but not limited thereto. In other embodiments, the light transmitting patterns TP are disposed in the pixel structures PX1, PX2, and PX3, the plane area of the color filter pattern CFP1 is smaller than the plane area of the color filter pattern CFP2 (that is, the plane area of the light transmitting pattern TP located in the pixel structure PX1 is larger than the plane area of the light transmitting pattern TP located in the pixel structure PX2), and the plane area of the color filter pattern CFP2 is smaller than the plane area of the color filter pattern CFP3 (that is, the plane area of the light transmitting pattern TP located in the pixel structure PX2 is larger than the plane area of the light transmitting pattern TP located in the pixel structure PX3), but not limited thereto. By the setting of the color filter patterns CFP1, CFP2, and CFP3 and the light transmitting patterns TP with different plane areas, the phenomenon of a yellowish screen of the reflective display panel 10 can be reduced and brightness can be improved, thereby improving color saturation. In particular, the plane areas of the color filter patterns and the light transmitting patterns refer to the areas of the color filter patterns CFP1, CFP2, and CFP3 and the light transmitting patterns TP on the plane of the direction D1 and the direction D2, that is, the projected areas of the color filter patterns CFP1, CFP2, and CFP3 and the light transmitting patterns TP on a substrate surface 102s of the second substrate 102.

In the embodiment, a common electrode layer CEL and an overcoat layer 150 may also be provided on the second substrate 102, but not limited thereto. In other embodiments, the common electrode layer CEL may be disposed on the first substrate 101 (that is, the common electrode layer CEL is located between the first substrate 101 and the liquid crystal layer LCL). The overcoat layer 150 covers the color filter patterns CFP and the light transmitting patterns TP, and the common electrode layer CEL is disposed on the overcoat layer 150. Since the overcoat layer 150 may be a light transmitting layer, in another embodiment, the light transmitting pattern TP may include a part of the overcoat layer 150, that is, the overcoat layer 150 of the reflective display panel 10 covers the color filter patterns CFP and fills in regions labeled TP in FIG. 2. An electric field generated between the common electrode layer CEL and the reflective electrode RE is adapted to drive multiple liquid crystal molecules (not shown) in the liquid crystal layer LCL to rotate to form an arrangement state corresponding to the direction and the intensity of the electric field. By changing the arrangement state of the liquid crystal molecules, a polarization state of light passing through the liquid crystal layer LCL is changed to form a light emission brightness corresponding to the arrangement state.

In order to orient the arrangement of the liquid crystal molecules in the liquid crystal layer LCL in a natural state (that is, not affected by an external force), a first alignment layer AL1 covering the reflective electrodes RE may also be disposed on the first substrate 101, and a second alignment layer AL2 covering the common electrode layer CEL may also be disposed on the second substrate 102. The liquid crystal layer LCL is sandwiched between the first alignment layer AL1 and the second alignment layer AL2. For example, in the embodiment, a first alignment direction AD1 of the first alignment layer AL1 may be anti-parallel to a second alignment direction AD2 of the second alignment layer AL2, that is, the liquid crystal layer LCL may be driven in an electrically controlled birefringence (ECB) mode, an in-plane switching (IPS) mode, or a fringe-field switching (FFS) mode. However, the disclosure is not limited thereto. In other embodiments, the first alignment direction AD1 may be perpendicular to the second alignment direction AD2, that is, the liquid crystal layer LCL may be driven in a twisted nematic (TN) mode.

The spacers SP are also provided between the first substrate 101 and the second substrate 102 to form a cavity capable of filling the liquid crystal layer LCL. FIG. 3 shows only main spacers among the spacers SP. In some embodiments, the spacers SP may further include sub-spacers (not shown), wherein the height of the sub-spacer in the direction D3 is lower than the height of the main spacer in the direction D3. In the embodiment, the spacers SP may be dispersedly disposed on the second substrate 102 and overlap with the reflective electrodes RE of the pixel structures PX. The spacers SP are located between the second alignment layer AL2 and the second substrate 102. However, the disclosure is not limited thereto. In other embodiments, the spacer SP may be disposed on the first substrate 101 (that is, the spacer SP may be disposed between the first alignment layer AL1 and the first substrate 101). In the embodiment, the spacers SP may completely overlap with at least part of the color filter patterns CFP (or the reflective electrodes RE), but not limited thereto. In other embodiments, the spacer SP may be disposed between two adjacent pixel structures PX and overlap with the two reflective electrodes RE of the two pixel structures PX at the same time.

In the embodiment, the spacer SP has a first side edge SPe 1 and a second side edge SPe2 facing away from each other and sequentially arranged along the second alignment direction AD2. In particular, since there is a significant height difference between the spacer SP and a film surface on which the spacer SP stands (for example, the surface of the common electrode layer CEL), during an alignment process (for example, a rubbing process for alignment) of the second alignment layer AL2, an alignment effect to a part of the second alignment layer AL2 shielded by the spacer SP along the second alignment direction AD2 (that is, the part of the second alignment layer AL2 located near the second side edge SPe2 of the spacer SP, see a region near an arrow labeling a weak alignment region WA in FIG. 3) is reduced, thereby affecting the arrangement state of a part of the liquid crystal layer LCL, causing the phenomenon of light leakage when the reflective display panel 10 is operated in a dark state.

In order to solve the phenomenon of light leakage, the reflective display panel 10 of the embodiment is also provided with multiple light shielding patterns LSP, and the light shielding patterns LSP respectively overlap with the spacers SP. The light shielding patterns LSP are located between the spacers SP and the second substrate 102. More specifically, the light shielding patterns LSP each overlaps with the second side edge SPe2 of the corresponding spacer SP. The orthographic projection of the second side edge SPe2 of each spacer SP on the substrate surface 102s of the second substrate 102 is located within the orthographic projection of the overlapping light shielding pattern LSP on the substrate surface 102s. Accordingly, the dark state light leakage caused by the weak alignment of the second alignment layer AL2 on the side of the second side edge SPe2 of the spacer SP can be effectively reduced.

It is particularly important to note that since each light shielding pattern LSP does not overlap with the first side edge SPe1 of the corresponding spacer SP (that is, the orthographic projection of the first side edge SPe1 of each spacer SP on the substrate surface 102s of the second substrate 102 does not overlap with the orthographic projection of the light shielding pattern LSP on the substrate surface 102s), the area of the light shielding pattern LSP can also be reduced to prevent excessive reflectivity reduction of the reflective display panel 10 caused by disposing the light shielding pattern LSP. For example, in the embodiment, the orthographic projection outline of the spacer SP on the substrate surface 102s of the second substrate 102 is circular, and the orthographic projection outline of the light shielding pattern LSP on the substrate surface 102s is crescent (as shown in FIG. 2), but not limited thereto. Specifically, since the reflective electrode RE of the pixel structure PX of the reflective display panel 10 is used to reflect ambient light or light from a front light module to display a corresponding image, the plane area of the reflective electrode RE of the pixel structure PX is equivalent to a display area of the pixel structure PX. The spacer SP overlaps with the reflective electrode RE in the direction D3. Therefore, in order to cover the weak alignment region WA located near the spacer SP and prevent reducing reflectivity caused by covering excessive display area of the pixel structure PX, the light shielding pattern LSP overlaps with a part of the spacer SP (overlaps with the part of the spacer SP with the second side edge SPe2) in the direction D3, that is, the orthographic projection of the light shielding pattern LSP on the substrate surface 102s of the second substrate 102 overlaps with a part of the orthographic projection of the spacer SP on the substrate surface 102s of the second substrate 102, and the part includes the orthographic projection of the second side edge SPe2 of the spacer SP on the substrate surface 102s of the second substrate 102.

From another point of view, the light shielding pattern LSP has a first pattern side edge LSPe1 and a second pattern side edge LSPe2 facing away from each other and sequentially arranged along the second alignment direction AD2. In the embodiment, the second pattern side edge LSPe2 of the light shielding pattern LSP may be conformal to the second side edge SPe2 of the spacer SP, so that the small-area light shielding pattern LSP may cover the weak alignment region WA and prevent excessive reflectivity reduction, but not limited thereto. In addition, the first pattern side edge LSPe1 of the light shielding pattern LSP may also be conformal to the second side edge SPe2 of the spacer SP to further reduce the area of the light shielding pattern LSP. Therefore, the orthographic projection outline of the light shielding pattern LSP on the substrate surface 102s may be crescent, but not limited thereto. Each spacer SP overlaps with the first pattern side edge LSPe1 of the corresponding light shielding pattern LSP, but does not overlap with the second pattern side edge LSPe2 of the light shielding pattern LSP.

In the embodiment, the spacer SP has a width W along the second alignment direction AD2 (or the first alignment direction AD1), there is a spacing S between the second pattern side edge LSPe2 of each light shielding pattern LSP and the second side edge SPe2 of the overlapping spacer SP along the second alignment direction AD2, and the spacing S is greater than 0, so the second pattern side edge LSPe2 of the light shielding pattern LSP does not overlap with the spacer SP. As shown in FIG. 1 to FIG. 3, in the embodiment, viewing from the direction D3, a part of the light shielding pattern LSP overlaps with a part of the spacer SP, another part of the light shielding pattern LSP protrudes outward from the second side edge SPe2 of the spacer SP and does not overlap with the spacer SP, and there is the spacing S greater than 0 between the edge of the protruding another part (that is, the second pattern side edge LSPe2 of the light shielding pattern LSP) and the second side edge SPe2 of the spacer SP. In addition, in the embodiment in which the spacers SP of the reflective display panel 10 include the main spacer and the sub-spacer with different heights, in addition to adopting the above configuration manner of the light shielding pattern LSP, it is preferred to use two masks to respectively form the main spacer and the sub-spacer (that is, to use one mask to form the main spacer, and use the other mask to form the sub-spacer), but not limited thereto. Compared with the traditional manufacturing manner of using one half tone mask to form the main spacer and the sub-spacer at the same time, the manufacturing manner of using the two masks to respectively form the main spacer and the sub-spacer can reduce the size variation of the spacers and the step variation between the spacers. Therefore, the above configuration manner of the light shielding pattern LSP can further achieve the ultimate contrast requirement.

Other embodiments will be enumerated below to describe the disclosure in detail, wherein the same components will be labeled with the same numerals, and the description of the same technical content will be omitted. Please refer to the above embodiment for the omitted part, which will not be elaborated below.

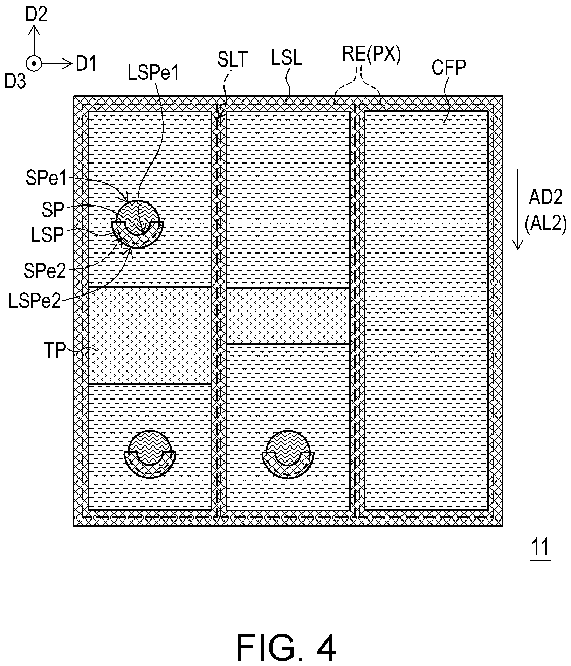

FIG. 4 is a schematic front view of a part of multiple film layers of a reflective display panel according to a second embodiment of the disclosure. It should be noted first that except for the film layers shown in FIG. 4, the film layer structures of the display panel 11 on the first substrate are all similar to the display panel 10 of FIG. 1. Therefore, the illustration and description of the film layer structures may be found in the relevant paragraphs and corresponding drawings of the above embodiment.

Please refer to FIG. 1, FIG. 3, and FIG. 4. The difference between a reflective display panel 11 of the embodiment and the reflective display panel 10 of FIG. 2 is that the reflective display panel 11 further includes a light shielding layer LSL. In the embodiment, there is a micro slit SLT between the two reflective electrodes RE of any two adjacently arranged pixel structures PX (that is, the spacing between the two pixel structures PX) along the direction D1 or the direction D2, and the light shielding layer LSL overlaps with the micro slit SLT. More specifically, the orthographic projection of the micro slit SLT on a substrate surface 101s of the first substrate 101 is located within the orthographic projection of the light shielding layer LSL on the substrate surface 101s. In the embodiment, the light shielding layer LSL and the light shielding pattern LSP may selectively be the same film layer (that is, one film layer is used to form the light shielding layer LSL and the light shielding pattern LSP), but not limited thereto. For example, the reflective display panel 11 may include a black matrix layer, and the black matrix layer includes the light shielding layer LSL and the light shielding pattern LSP, but not limited thereto.

For example, since the micro slit SLT does not overlap with the reflective electrode RE in the direction D3, the arrangement at least part of the liquid crystal layer LCL in the region of the micro slit SLT (that is, the liquid crystal layer LCL that overlaps with the micro slit SLT in the direction D3) cannot be controlled by the reflective electrode RE, causing the phenomenon of light leakage in the dark state. In addition, in the embodiment, the voltage polarities of two reflective electrodes RE adjacently arranged along the direction D1 or the direction D2 may be opposite within the same frame period. In other words, the reflective display panel 11 is, for example, driven by an electrical architecture of row inversion, column inversion, or dot inversion, but not limited thereto. The liquid crystal layer LCL driven based on the above electrical architecture is prone to the phenomenon of arrangement inversion of the liquid crystal molecules in the region of the micro slit SLT, causing the phenomenon of light leakage in the dark state. Therefore, through the configuration of the light shielding layer LSL, the phenomenon of light leakage when the reflective display panel 11 is operated in the dark state can be significantly reduced, thereby improving the display contrast. From another point of view, the flexibility in selecting the electrical architecture for driving the reflective display panel 11 can be increased.

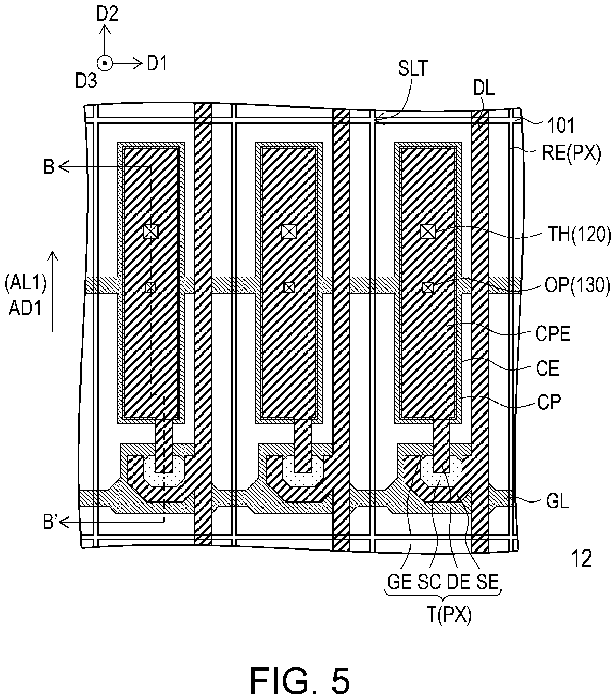

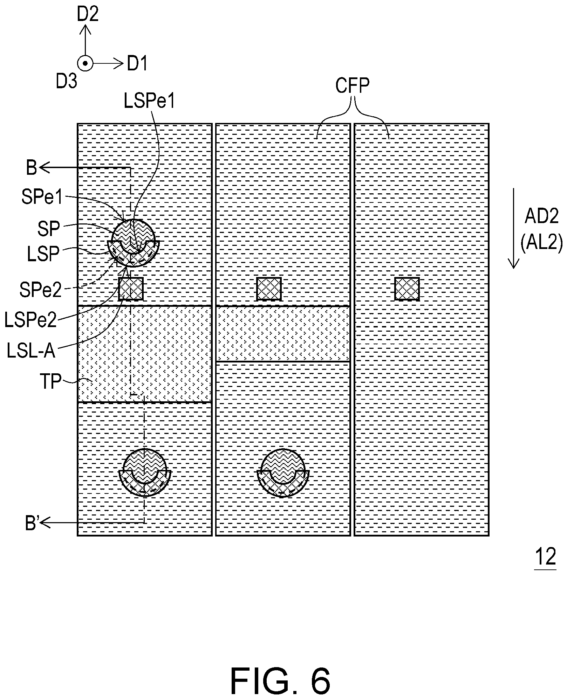

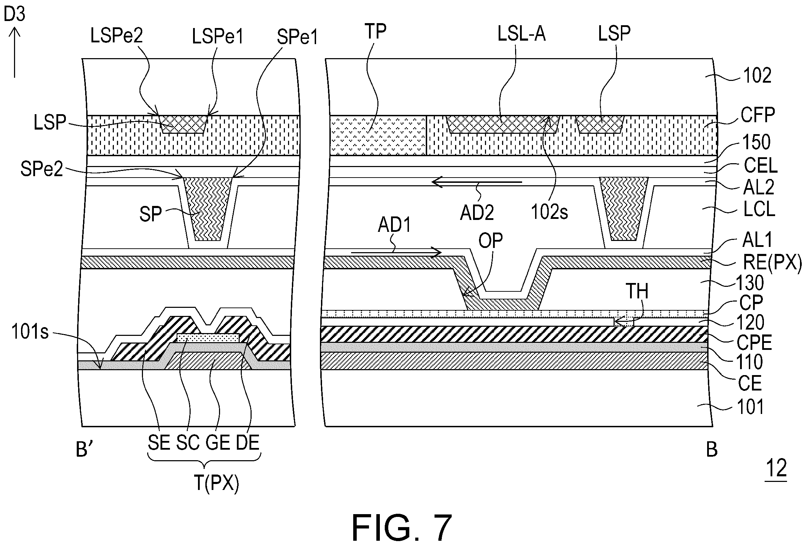

FIG. 5 and FIG. 6 are schematic front views of a part of multiple film layers of a reflective display panel according to a third embodiment of the disclosure. FIG. 7 is a schematic cross-sectional view of the reflective display panel of FIG. 5 and FIG. 6. FIG. 7 corresponds to a cross-sectional line B-B' of FIG. 5 and FIG. 6. For clear presentation, FIG. 5 only shows a part of the film layers on the first substrate 101 in FIG. 7, and FIG. 6 only shows a part of the film layers on the second substrate 102 in FIG. 7.

Please refer to FIG. 5 to FIG. 7. The difference between a reflective display panel 12 of the embodiment and the reflective display panel 10 of FIG. 1 to FIG. 3 is that the reflective display panel 11 further includes a light shielding layer LSL-A. In the embodiment, the light shielding layer LSL-A overlaps with the opening OP of the insulating layer 130. More specifically, the orthographic projection of the opening OP on the substrate surface 101s of the first substrate 101 overlaps with the orthographic projection of the light shielding layer LSL-A on the substrate surface 101s. In the embodiment, the orthographic projection of the opening OP on the substrate surface 101s of the first substrate 101 may be located within the orthographic projection of the light shielding layer LSL-A on the substrate surface 101s, but not limited thereto. For example, in the embodiment, the light shielding layer LSL-A and the light shielding pattern LSP may selectively be the same film layer, but not limited thereto. For example, the reflective display panel 12 may include a black matrix layer, and the black matrix layer includes the light shielding layer LSL-A and the light shielding pattern LSP, but not limited thereto.

Since the first alignment layer AL1 is recessed near the opening OP due to the shape of the opening OP, the first alignment layer AL1 is weakly aligned near the opening OP during an alignment process of the first alignment layer AL1, causing the phenomenon of light leakage in the dark state. In addition, the arrangement state of the liquid crystal layer LCL near the opening OP is affected by the surface topography of the opening OP of the insulating layer 130, which is prone to the phenomenon of poor arrangement of the liquid crystal molecules, causing the phenomenon of light leakage in the dark state. Therefore, through the configuration of the light shielding layer LSL-A, the phenomenon of light leakage when the reflective display panel 12 is operated in the dark state can be effectively reduced, thereby improving the dark state performance and the display contrast.

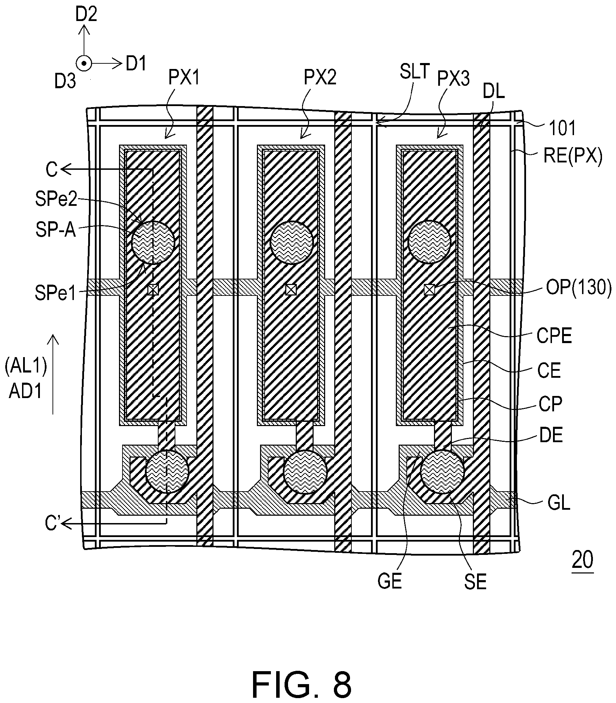

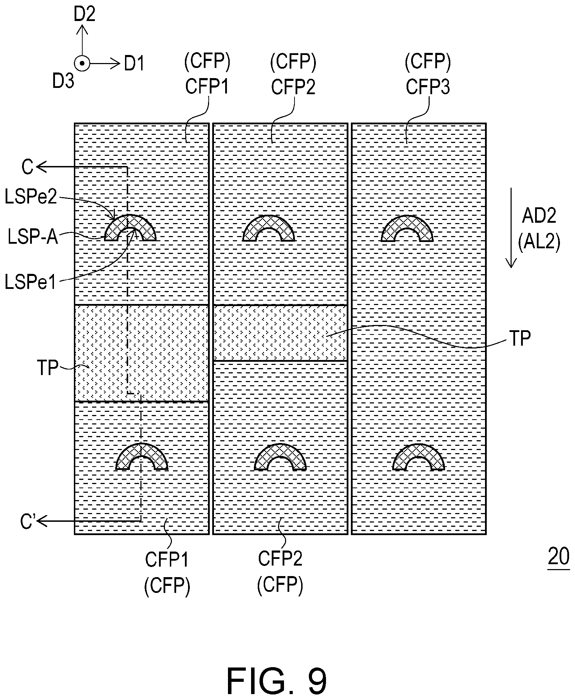

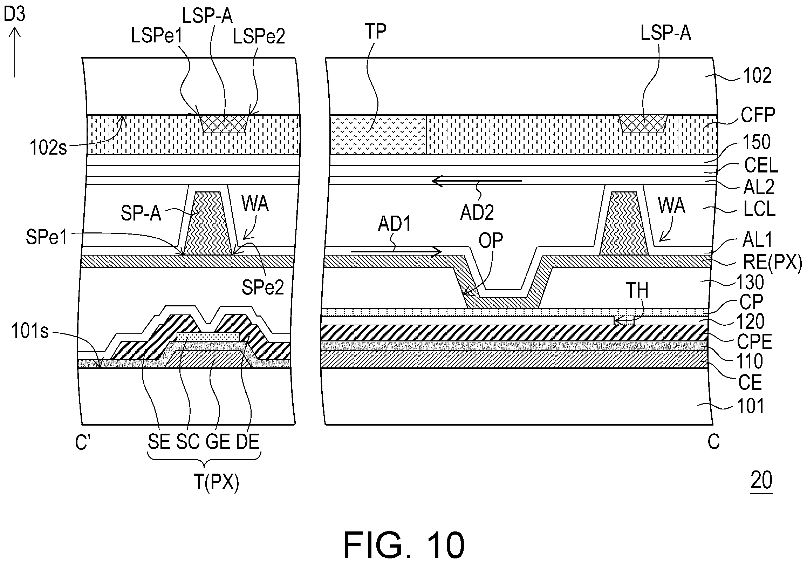

FIG. 8 and FIG. 9 are schematic front views of a part of multiple film layers of a reflective display panel according to a fourth embodiment of the disclosure. FIG. 10 is a schematic cross-sectional view of the reflective display panel of FIG. 8 and FIG. 9. FIG. 10 corresponds to a cross-sectional line C-C' of FIG. 8 and FIG. 9. For clear presentation, FIG. 8 only shows a part of the film layers on the first substrate 101 in FIG. 10, and FIG. 9 only shows a part of the film layers on the second substrate 102 in FIG. 10. Please refer to FIG. 8 to FIG. 10. The difference between a reflective display panel 20 of the embodiment and the reflective display panel 10 of FIG. 3 is that the substrate for disposing the spacers is different. Specifically, in the reflective display panel 20 of the embodiment, multiple spacers SP-A may be disposed on the first substrate 101 and located between the first alignment layer AL1 and the first substrate 101.

It should be noted that in FIG. 8 to FIG. 10, the first alignment direction AD 1 of the first alignment layer AL1 is anti-parallel to the second alignment direction AD2 of the second alignment layer AL2 as an example, but not limited thereto. In other embodiments, the first alignment direction AD1 may be perpendicular to the second alignment direction AD2 of the second alignment layer AL2. As shown in FIG. 8 to FIG. 10, the first side edge SPe1 and the second side edge SPe2 of each spacer SP-A are sequentially arranged along the first alignment direction AD1. Please refer to FIG. 1 to FIG. 3 and FIG. 8 to FIG. 10. The arrangement direction of the first side edge SPe1 and the second side edge SPe2 of the spacer SP-A of the embodiment is opposite to the arrangement direction of the first side edge SPe1 and the second side edge SPe2 of the spacer SP of FIG. 3. Therefore, the position of a light shielding pattern LSP-A of the embodiment on the second substrate 102 needs to be correspondingly adjusted, so that the light shielding pattern LSP-A overlaps with the second side edge SPe2 of the corresponding spacer SP-A, but does not overlap with the first side edge SPe1. From another point of view, the arrangement direction of the first pattern side edge LSPe1 and the second pattern side edge LSPe2 of the light shielding pattern LSP-A of the embodiment is opposite to the arrangement direction of the first pattern side edge LSPe1 and the second pattern side edge LSPe2 of the light shielding pattern LSP of FIG. 3, that is, the light shielding pattern LSP-A has the first pattern side edge LSPe1 and the second pattern side edge LSPe2 facing away from each other and sequentially arranged along the first alignment direction AD1. Similar to the first embodiment, the second pattern side edge LSPe2 of the light shielding pattern LSP-A of the embodiment may be conformal to the second side edge SPe2 of the spacer SP-A, but not limited thereto. In addition, the first pattern side edge LSPe1 of the light shielding pattern LSP-A may also be conformal to the second side edge SPe2 of the spacer SP-A. Each spacer SP-A overlaps with the first pattern side edge LSPe1 of the corresponding light shielding pattern LSP-A, but does not overlap with the second pattern side edge LSPe2 of the light shielding pattern LSP-A. In addition, the reflective display panel 20 of the embodiment may further include a light shielding layer (similar to the light shielding layer LSL of FIG. 4) overlapping with the micro slit SLT and/or a light shielding layer (similar to the light shielding layer LSL-A of FIG. 6 and FIG. 7) overlapping with the opening OP of the insulating layer 130. Reference may be made to FIG. 4 to FIG. 7 for the relevant description, which will not be elaborated here.

Although in the drawings of the first to fourth embodiments above, the light shielding patterns LSP and LSP-A and the light shielding layers LSL and LSL-A are disposed on the second substrate 102 (that is, the light shielding patterns LSP and LSP-A and the light shielding layers LSL and LSL-A are disposed between the second substrate 102 and the liquid crystal layer LCL) as an example, but not limited thereto. In other embodiments, the light shielding patterns LSP and LSP-A and the light shielding layers LSL and LSL-A may be disposed on the first substrate 101 (that is, the light shielding patterns LSP and LSP-A and the light shielding layers LSL and LSL-A are disposed between the first substrate 101 and the liquid crystal layer LCL).

In the first to fourth embodiments above, the reflective electrode RE defines the reflection area of the pixel structure PX of the reflective display panel 10, 11, 12, and 20. In particular, the reflective display panel of the disclosure may be a totally reflective display panel in which the pixel structure has only the reflection area or a transflective display panel in which the pixel structure has the reflection area and a transmission area (not shown).

In summary, in the reflective display panel according to the embodiments of the disclosure, the spacers disposed between the first substrate and the second substrate are covered with the alignment layers. Each spacer has the first side edge and the second side edge sequentially arranged along the alignment direction of the alignment layer. Through overlappingly disposing the light shielding pattern on the second side edge of each spacer, dark state light leakage caused by a weak alignment of the alignment layer on the second side edge of the spacer can be effectively reduced. In addition, since the light shielding pattern does not overlap with the first side edge of the spacer, excessive reflectivity reduction of the reflective display panel caused by disposing the light shielding pattern can be prevented.

## Claims

1. A reflective display panel (10, 11, 12, 20), comprising:
a first substrate (101) and a second substrate (102), overlappingly disposed along a stacking direction;
a plurality of pixel structures (PX, PX1, PX2, PX3), disposed on the first substrate (101) and each having a reflective electrode (RE);
a plurality of spacers (SP, SP-A), disposed between the first substrate (101) and the second substrate (102);
a first alignment layer (AL1), disposed on the first substrate (101) and having a first alignment direction (AD1);
a second alignment layer (AL2), disposed on the second substrate (102) and having a second alignment direction (AD2);
a liquid crystal layer (LCL), disposed between the first alignment layer (AL1) and the second alignment layer (AL2); and
a plurality of light shielding patterns (LSP, LSP-A), respectively overlapping with the spacers (SP, SP-A) along the stacking direction,
wherein each of the spacers (SP, SP-A) has a first side edge (SPe1) and a second side edge (SPe2) facing away from each other and sequentially arranged along the first alignment direction (AD1) or the second alignment direction (AD2), and in the stacking direction, each of the light shielding patterns (LSP, LSP-A) overlaps with the second side edge (SPe2) of one of the spacers (SP, SP-A), but does not overlap with the first side edge (SPe1) of the one of the spacers (SP, SPA).

2. The reflective display panel (10, 11, 12, 20) according to claim 1, wherein an orthographic projection of the second side edge (SPe2) of each of the spacers (SP, SP-A) on a substrate surface (101s, 102s) of the first substrate (101) or the second substrate (102) is located within an orthographic projection of one of the light shielding patterns (LSP, LSP-A) on the substrate surface (101s, 102s).

3. The reflective display panel (10, 11, 12) according to claim 1, wherein the spacers (SP) are disposed on the second substrate (102) and are located between the second alignment layer (AL2) and the second substrate (102), and the first side edge (SPe1) and the second side edge (SPe2) of each of the spacers (SP) are sequentially arranged along the second alignment direction (AD2).

4. The reflective display panel (10, 11, 12, 20) according to claim 1, wherein the light shielding patterns (LSP, LSP-A) are disposed on the second substrate (102) and are located between the spacers (SP, SP-A) and the second substrate (102).

5. The reflective display panel (10, 11, 12, 20) according to claim 1, wherein an orthographic projection outline of each of the spacers (SP, SP-A) on a substrate surface (101s, 102s) of the first substrate (101) or the second substrate (102) is circular, and an orthographic projection outline of each of the light shielding patterns (LSP, LSP-A) on the substrate surface (101s, 102s) is crescent.

6. The reflective display panel (10, 11, 12, 20) according to claim 1, wherein each of the light shielding patterns (LSP, LSP-A) has a first pattern side edge (LSPe1) and a second pattern side edge (LSPe2) facing away from each other and sequentially arranged along the first alignment direction (AD1) or the second alignment direction (AD2), and in the stacking direction, each of the spacers (SP, SP-A) overlaps with the first pattern side edge (LSPe1) of one of the light shielding patterns (LSP, LSP-A), but does not overlap with the second pattern side edge (LSPe2) of the one of the light shielding patterns (LSP, LSP-A).

7. The reflective display panel (10, 11, 12, 20) according to claim 6, wherein the second side edge (SPe2) of each of the spacers (SP, SP-A) is conformal to the second pattern side edge (LSPe2) of the one of the light shielding patterns (LSP, LSP-A).

8. The reflective display panel (10, 11, 12, 20) according to claim 1, wherein the spacers (SP, SP-A) are disposed overlapping with the reflective electrodes (RE) of the pixel structures (PX, PX1, PX2, PX3).

9. The reflective display panel (11) according to claim 1, wherein there is a micro slit (SLT) between the reflective electrodes (RE) of the pixel structures (PX), and the micro slit (SLT) is overlappingly provided with a light shielding layer (LSL) along the stacking direction, and the light shielding layer (LSL) and the light shielding patterns (LSP) are a same film layer.

10. The reflective display panel (12) according to claim 1, wherein each of the pixel structures (PX) further comprises:
an active element (T); and
an insulating layer (130), disposed between the active element (T) and the reflective electrode (RE), and having an opening (OP), wherein the reflective electrode (RE) is disposed on the insulating layer (130) and extends into the opening (OP) to be electrically connected to the active element (T), the opening (OP) is overlappingly provided with a light shielding layer (LSL-A) along the stacking direction, and the light shielding layer (LSL-A) and the light shielding patterns (LSP) are a same film layer.

11. The reflective display panel (20) according to claim 1, wherein the spacers (SP-A) are disposed on the first substrate (101) and are located between the first alignment layer (AL1) and the first substrate (101), and the first side edge (SPe1) and the second side edge (SPe2) of each of the spacers (SP-A) are sequentially arranged along the first alignment direction (AD1).
